Europäisches Patentamt

European Patent Office

Office européen des brevets

(11) Publication number: 0 294 177 B1

# EUROPEAN PATENT SPECIFICATION

(45) Date of publication of patent specification: **19.08.92**

(51) Int. Cl.⁵: **A23F 3/42**, A23L 1/221, A23F 5/48

(21) Application number: **88305000.7**

(22) Date of filing: **01.06.88**

(54) **Method for manufacturing a food product.**

(30) Priority: **02.06.87 US 57283**

(43) Date of publication of application:
**07.12.88 Bulletin 88/49**

(45) Publication of the grant of the patent:
**19.08.92 Bulletin 92/34**

(84) Designated Contracting States:
**AT BE CH DE ES FR GB GR IT LI NL SE**

(56) References cited:
EP-A- 0 079 242
DE-A- 2 314 775
FR-A- 932 254
FR-A- 2 172 144

**Römpps Chemie - Lexikon, 8ed. , 1983, pp 1718, 2612, 4411-4413**

(73) Proprietor: **UNILEVER PLC**
**Unilever House Blackfriars P.O. Box 68 London EC4P 4BO(GB)**
(84) Designated Contracting States:
**GB**

(73) Proprietor: **UNILEVER N.V.**
**Burgemeester s'Jacobplein 1 P.O. Box 760 NL-3000 DK Rotterdam(NL)**
(84) Designated Contracting States:
**BE CH DE ES FR GR IT LI NL SE AT**

(72) Inventor: **Mai, Jimbin**
**5 Foxburn Street**
**New city New York 10956(US)**
Inventor: **Gobbo, Steven A.**
**278 Grace Avenue**
**Secaucus New Jersey 07094(US)**
Inventor: **Breitbart, Dennis Jay**
**0012 Ouincy Circle**
**Dayton New Jersey 08810(US)**
Inventor: **Fischer, Craig Daniel**
**19 Apache Drive**
**Manalapan New Jersey 07726(US)**

(74) Representative: **Hartong, Richard Leroy et al Unilever N.V. Patent Division P.O. Box 137 NL-3130 AC Vlaardingen(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a method for treating plant materials to recover aroma and flavour compounds therefrom while ensuring that the residual plant material undergoes little or no deterioration.

A number of processes are known in the prior art for recovering flavour and aroma constituents from plant materials. In the processing of coffee, for example, processes are known whereby the coffee aroma and flavour is recovered from ground roasted coffee by techniques using distillation and condensation. The condensate is reserved, while the ground coffee undergoes additional processing such as aqueous extraction to recover water soluble coffee solids to be used in an instant coffee product. The aroma and flavour condensate is thereafter recombined with soluble coffee solids to form an aromatised instant coffee product. Other uses for the aroma/flavour condensate include its use as flavouring material in other foodstuffs such as candy, and the placing of it in the head space of a jar of soluble coffee to provide a pleasant aroma on opening thereof for the first time.

Similarly, in the tea processing art, tea aroma/flavour is often removed from tea leaf, and the tea leaf then extracted to remove water soluble tea solids. The flavour and aroma constituents are then returned to the tea solids to provide an instant tea, in liquid or dry form, of improved flavour and aroma.

These prior art processes have one or more disadvantages, either causing high losses of the natural aroma and flavour compounds, causing undesirable changes to occur in the recovered flavour and aroma product, or causing deterioration of the natural plant product so as to make it less suitable for further processing. Most of these prior art processes use externally applied heat, such as steam, to drive off the flavour and aroma materials.

In French Patent Specification FR-A-932,254 (J. Aumeréchal) a process has been described to recover volatile constituents from aromatic flowers and plants by subjecting the flowers and plants to a high-vacuum distillation, during which the material is heated by means of a very high frequency electric field. During this dielectric heating aromatic vapours are evolved which are condensed on the surface of cryogenic condensors arranged in the distillation apparatus outside the dielectric field.

In German Patent Specification DE-A-2,314,775 (B.A.T. Cigaretten-Fabriken) a process has been described in which botanical material, particularly tobacco, is tretaed with water to a level of 5-75 wt%, and optionally an inert, non-toxic, volatile organic solvent in which the volatile flavour and aroma constituents of the botanical material are soluble. The moistened botanical material is subsequently exposed to microwave radiation of a frequency of at least 915 MHz and a power level of 0.11-0.54 kW/kg of contained water for a period of time and at a distance such that the water is substantially volatilized and carriers the flavour and aroma constituents to the surface of the botanical material, but without leaving and expanding this material.

The present invention aims to overcome the disadvantages of these prior art methods.

Therefore the present invention relates to a method of stripping aroma and flavour compounds from a plant material, subjecting the plant material to microwave radiation in the presence of water, which comprises the steps of:

(a) releasing a substantial portion of said water and said aroma and flavour compounds from the plant material as a vapour;

(b) drawing off the said vapour from the stripped plant material, and;

(c) collecting the said vapour as a condensate.

Preferably, the vapour is collected as a water-containing condensate and is either used by itself as a flavouring material or is added back to the plant material or an extract thereof after the plant material or the extract have been subjected to a further processing step, selected from the group consisting of aqueous extraction, decaffeination and drying.

The method of the present invention will be described with reference to a method for removing valuable aroma and flavour compounds from tea. It should be recognised, however, that the method is also applicable to the production of good quality flavour and aroma preparation from fruits, herbs, spices, vegetables, coffee and other plant materials where the realisation of a high quality aroma and flavour product from the natural product, without at the same time causing substantial deterioration of the raw material, is a desirable end.

In accordance with one embodiment of the present invention, microwave stripping of aroma and flavouring materials from tea leaf is accomplished by wetting the tea leaf with water, thereafter sealing it in a heating vessel and subjecting the moistened tea, uniformly, to microwave radiation. The microwave stripping releases, in vapour form, a portion of the water added to the tea during the wetting step. At the same time, a substantial portion of the aroma and flavour consitutuents are removed. The combination of the moisture given off by the wetted tea together with the aroma and flavouring constituents are recovered by subjecting the effluent vapour to condensation at low temperatures.

The important variables to regulate in accordance with the method of the present invention include the moisture level to be added to the plant material, the power levels used during the microwave treatment, the degree of vacuum and/or pressure applied to the plant material, and the presence or absence of auxiliary convection or conductive heating. Each of these parameters can be varied depending upon the nature of the plant material and the results desired.

In the case of tea leaf, good results have been obtained where the tea leaf is wetted with water, to provide a tea leaf preparation having a moisture content of from about 25 to about 90%, by weight. In processes where the end product is intended to be a dry tea leaf product, such as a decaffeinated leaf tea, good results have been obtained by using a moistened tea leaf preparation having from about 40% to 60%, by weight, of moisture. The higher moisture levels result in more complete removal of aroma and flavour compounds from the tea, but also provide an aroma and flavour condensate more dilute with respect to the aroma and flavour compounds.

These interrelationships are more fully shown in the drawings attached hereto in which:

Fig. 1    shows the relationship between stripping efficiency and draw-off ratio under vacuum (0 - 1333.2 Pa (0-10 mm Hg)) microwave stripping conditions; and

Fig. 2    shows the relationship between draw-off ratio and concentration of condensate obtained under vacuum microwave stripping.

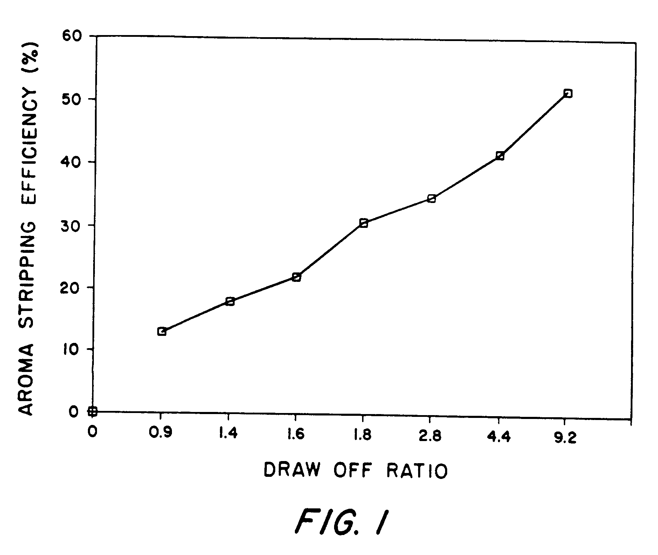

As shown by the studies summarised in Fig. 1, within the range studied, a fairly linear relationship exists between draw-off ratio and stripping efficiency. Thus, following the considerations established in Fig. 1, it is possible to regulate stripping conditions to obtain maximum yield consistent with the realisation of a condensate having a desired concentration of aroma/flavour.

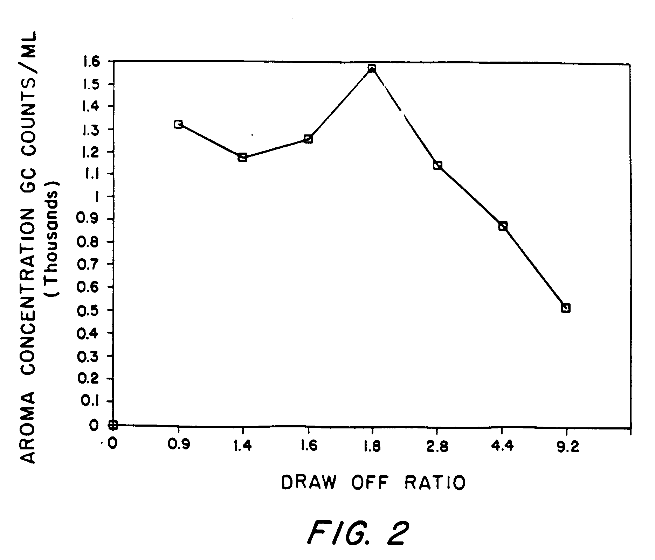

Further, as shown in Fig. 2, at higher draw-off ratio, the recovered condensate will be more dilute. A compromise between draw-off ratio and efficiency may be made to avoid the need for additional downstream processing, ie. further concentration of the aroma/flavour condensate.

Microwave heating in accordance with the method of this invention may vary over a wide range of energy levels, depending on the product loading, the dimensions of the container, and upon whether the plant material is agitated uniformly during heating to avoid localised overheating. Good results have been obtained where the tea leaf is wetted with an equal weight of water, eg. 75 grams of leaf wetted with 75 grams of water, and the sample exposed to microwave energy at a level of 0.6 kW, the source having a frequency of 2450 MHz. Energy levels of 0.1 kW-200 kW and frequencies of 715 MHz-2450 MHz are suitable operational parameters.

The microwave stripping operation is extremely efficient. It can take as little as five minutes to complete and can remove from 25-80% of the aroma and flavour compounds found in the starting tea leaf. In addition, the aroma/flavour condensate obtained is of superior quality and can be incorporated into finished tea products without further processing. Furthermore, the stripped tea leaf remains largely unaffected by the processing and can be used as the raw material for the preparation of regular tea leaf products, decaffeinated tea leaf products and instant tea products by subjecting it to conventional processes.

In the microwave stripping operation of the present invention, care must be taken to avoid hot spots which may be formed in the bed of prewetted tea. This problem can be avoided by the proper control of the microwave power level and by ensuring that the radiation is uniformly applied to the leaf. A rotating heating vessel may be used or the tea may be treated in a continuous production fluidised bed. Conventional pulsing of the power source is also beneficial.

The invention will be further described by the following examples.

## EXAMPLE 1

Prior art atmospheric steam stripping methods were carried out using 30 grams of black tea leaf that was pre-wetted with 30 grams of water and packed into a column with 10g of stainless steel boiling chips. Stripping of aroma and flavour was conducted at 95°C for 30 minutes. Condensate was condensed at 4°C, using circulating propylene glycol to cool the condensing surface.

Vacuum steam stripping was conducted in the same equipment, using 30g of black tea leaf packed into a column with 10g of stainless steel boiling chips, at 1333.2-3333 Pa (10-25 mm Hg) vacuum with a steam temperature of 60±5°C, and a bed temperature maintained at 65±5°C to prevent condensation. Liquid nitrogen traps were used to collect the condensate in this instance.

In the procedures using microwave heating, a CEM Model MDS-81 microwave drying/digestion system sold by CEM Corporation, Indian Trail, NC 28079 was used. The system provides 0-100% of full power (600 W) in 1% increments. In this case, 30 grams of tea leaf, prewetted with 30 grams of water, was transferred in equal parts to two 120 ml Teflon heating vessels and sealed tightly. The outlets of these two vessels were connected to a propylene glycol cooled condenser (4°C) and/or two liquid nitrogen traps connected in series. Both atmospheric pressure and vacuum stripping were performed, as indicated below.

The condensate was collected in each case, and aliquots were taken for gas chromatographic analysis and sensory evaluation. The stripped leaf was weighed to calculate the water retained. The leaf was then air dried overnight and stored for further analysis and tasting. For aroma/flavour mass balance studies, the treated leaf was analysed immediately.

For aroma/flavour balance studies, using capillary gas chromatographic analysis, the samples were prepared by Likens-Nickerson distillation. For the quantification of condensates, 5 ml of condensate was partitioned with 1 ml of 1:1 (V/V) methylene chloride:hexane mixture and the organic phase was used for GC analysis. The samples were chromatographed on a DB-5 60m x 0.32mm fused silica column with 1 nanometer film thickness. The initial column temperature was 40°C. After two minutes holding at 40°C, the temperature was programmed to rise at 4°C per minute to 250°C. To maximise the sensitivity, the splitless injection mode was used. The data is reported as GC area counts per aliquot analysed.

Sensory evaluation was conducted using informal taste panels of experienced tea tasters. Black tea leaf which had been treated by conventional prior art steam stripping techniques, and then dried was used as a control. Two grams of the stripped black tea leaf were packed into a tea bag with and without the add-back of the aroma/flavour condensate undergoing evaluation. The tea bag was then brewed for three minutes and tasted against an infusion prepared from the starting unstripped black tea leaf. For instant tea tasting, the aroma condensate was added to an instant tea product at a 5% level based on weight of tea solids. A black tea aroma condensate recovered by standard commercial techniques was used for comparison.

EXAMPLE 2

Comparison of Microwave Stripping of the Present Invention with Steam Stripping of Prior Art

A comparison of stripping efficiencies was made between the two aroma stripping methods, under both atmospheric and vacuum conditions, using the conditions given in Example 1. The results of these tests are given in Table 1 below. The draw off ratio (DOR) is defined as the volume of condensate collected divided by the dry weight of the tea leaf used. Therefore, the small the DOR the higher the condensate concentration.

In order to compare the efficiencies among several stripping methods, a more general term called total efficiency index (TEI) was used. The TEI is defined as the percent of the aroma/flavour stripped divided by the DOR times 100. Higher TEI indicate better efficiencies for the whole process as well as more concentrated condensates.

As shown in Table 1, microwave stripping was more effective than steam stripping under both atmospheric and vacuum conditions. In terms of the aroma/flavour recovered, atmospheric stripping appeared to be more efficient than vacuum stripping, whether microwave or prior art steam stripping was used.

### TABLE 1

#### Comparison of Various Stripping Methods on the Stripping Efficiency of Tea Aroma/Flavour

| Method of Stripping | % of Aroma/Flavour Stripped (I) | Draw-Off Ratio[a] (II) | Total Efficiency Index[b] (I/II x 100) |
|---|---|---|---|
| Atmospheric Steam Stripping | 42 | 2.7 | 16 |
| Vacuum Steam Stripping at 1999.8 Pa (15 mm Hg) | 25 | 3.7 | 7 |
| Atmospheric Microwave Stripping | 52 | 1.3 | 40 |
| Vacuum Microwave Stripping at 0-15.998 kPa (0-120 mm Hg) | 31 | 1.2 | 26 |

a - Draw-off ratio is defined as the volume of condensate collected divided by the dry weight of tea leaf used

b - Total efficiency index is defined as the percent of the aroma/flavour stripped divided by draw-off ratio times 100.

EXAMPLE 3

Comparison of Aroma/Flavour Stripped Under Atmospheric Pressure and Vacuum Conditions

5

A comparison of the aroma stripped under atmospheric pressure and two sets of vacuum conditions, 0-1333.2 Pa (0-10 mm Hg) and 8.66-15.99 kPa (65-120 mm Hg.), as outlined in Example 1, is presented in Table 2. The condensates analysed were obtained under otherwise identical conditions, using 30g dry weight of black tea leaf, prewetted with 30g of water, and a microwave power level of 0.6 kW for three minutes using the CEM system described in Example 1. Based on the total aroma/flavour present in the starting leaf, atmospheric microwave stripping stripped 65% of the aroma/flavour and recovered 52% thereof, while both vacuum microwave strippings stripped 40-52% and recovered 31%. Under the two vacuum conditions studied, the amount of aroma stripped appeared to be independent of the vacuum applied. Atmospheric microwave stripping recovered 20% more of the aroma/flavour originally present in the leaf than either of the samples prepared under vacuum.

TABLE 2

Comparison of Microwave Stripping Under Atmospheric & Two Sets of Vacuum Conditions, based on Gas Chromatographic Analysis

| Compound, Counts/ 2.5g Leaf | Starting Leaf Atmos. 101.32 kPa (760mm Hg) | Condensate | % Stripped | Condensate Vacuum 8.66-15.99 kPa (65-120mm Hg) | % Stripped | Condensate Vacuum 0-1333.2 Pa (0-10mm Hg) | % Stripped |
|---|---|---|---|---|---|---|---|
| t-2-Hexenal+c-3-hexanol | 1144 | 632 | 55 | 282 | 25 | 221 | 19 |
| Phenylacetaldehyde | 545 | 414 | 76 | 126 | 23 | 104 | 19 |
| Linalool oxide I | 43 | 27 | 63 | 24 | 56 | 32 | 74 |
| Linalool oxide II | 115 | 87 | 76 | 77 | 67 | 98 | 85 |
| Linalool | 176 | 109 | 62 | 98 | 56 | 111 | 63 |
| Methylsalicylate | 82 | 51 | 62 | 51 | 62 | 66 | 80 |
| Geraniol | 3 | 0 | 0 | 0 | 0 | 1 | 33 |
| beta-Ionone | 121 | 42 | 35 | 27 | 22 | 41 | 34 |
| Peaks identified | 3300 | 1903 | 58 | 1055 | 32 | 1104 | 34 |
| Total Peaks | 6910 | 3540 | 51 | 2172 | 31 | 2124 | 31 |

EXAMPLE 4

Study of Aroma/Flavour Mass Balance by Microwave Stripping

In an attempt to understand if vacuum and insufficient cooling of the effluent vapours was the cause for observed lowered recoveries, an aroma/flavour mass balance study was conducted. The aroma/flavour mass balance across the microwave heated stripping unit operation under both atmospheric and vacuum conditions was investigated. Conditions of operation were those given in Example 1 above. The results are set forth in Table 3. Based on the total available aroma/flavour quantitied by gas chromatography, both atmospheric and vacuum stripping studies show the same level of aroma/flavour accountability, ie. 86-88%. Between 12 to 14% of the aroma/flavour present in the leaf was lost to the process despite the use of an efficient trapping system. This loss was observed under both atmospheric and vacuum conditions, and to the same extent.

In general, a fairly good mass balance was observed for most of the compounds identified. However, aroma/flavour recoveries over 100% for hexanol and phenylacetaldehyde, especially under the atmospheric stripping condition, is not understood. It is possible that some of the aroma/flavour may exist in precursor forms through glycosidic and/or cyanoglycosidic linkages. The stripping process may cause the cleavage of these covalent linkages resulting in the formation of these components (J.Chrom. 331:83-90, 1985). Other mechanism(s) of generation of these compounds are also possible.

EP 0 294 177 B1

TABLE 3

Comparison of Aroma/Flavour Mass Balance by Microwave

Stripping Under Atmospheric & Vacuum Conditions

| Compound, Count/2.5g | Starting | Condensate Atmospheric | Spent | Ratio* | Starting | Condensate Vacuum | Spent | Ratio* |
|---|---|---|---|---|---|---|---|---|
| t-2-Hexenal+ c-3-hexenol | 1108 | 632 | 157 | 0.71 | 1144 | 282 | 725 | 0.88 |
| Phenylacetal-dehyde | 530 | 414 | 433 | 1.60 | 545 | 126 | 476 | 1.10 |
| Linalool oxide I | 41 | 27 | 6 | 0.80 | 43 | 24 | 17 | 0.95 |
| Linalool oxide II | 113 | 87 | 8 | 0.84 | 115 | 77 | 27 | 0.90 |
| Linalool | 171 | 109 | 37 | 0.85 | 176 | 98 | 68 | 0.94 |
| Geraniol | 1 | 0 | 0 | 0.00 | 3 | 0 | 1 | 0.33 |
| beta-Ionone | 122 | 42 | 55 | 0.80 | 121 | 27 | 93 | 0.99 |

## TABLE 3

### Comparison of Aroma/Flavour Mass Balance by Microwave Stripping Under Atmospheric & Vacuum Conditions

| Compound, Count/2.5g | Starting | Condensate Atmospheric | Spent | Ratio* | Starting | Condensate Vacuum | Spent | Ratio* |
|---|---|---|---|---|---|---|---|---|
| Nerolidol Peaks | 22 | 5 | 13 | 0.82 | 22 | 4 | 18 | 1.00 |
| Identified | 3274 | 1403 | 999 | 0.89 | 3320 | 1055 | 2016 | 0.93 |
| Total Peaks | 6757 | 3540 | 2378 | 0.88 | 6910 | 2172 | 2759 | 0.86 |

* (Condensate + Spent)/Starting

## EXAMPLE 5

Since stripping of aroma/flavour compounds from tea leaf was demonstrated to be more efficient at atmospheric pressure than vacuum stripping, optimisation of the stripping conditions at atmospheric

EP 0 294 177 B1

pressure to maximise the yield was investigated. Under constant microwave power, higher moisture content of leaf and long microwaving time result in an increased stripping efficiency, as shown in Table 4. However, this was accomplished at the cost of a more dilute aroma/flavour condensate. Therefore, a poor TEI resulted.

A lower degree of wetting of the leaf and a shorter microwaving time resulted in a higher TEI indicating a more economic process.

EXAMPLE 6

Effect of Microwave Power on Stripping Efficiency

The effect of microwave power on the aroma stripping efficiency under atmospheric stripping conditions was also investigated using the materials and procedures given in Example 1 above. It was found that an inverse relationship exists between the microwave power and stripping efficiency. The results of these tests are summarised in Table 5. However, when total efficiency was considered, stripping at 50% of the full microwave power is still a more economical process.

TABLE 4

| Comparison of the Efficiency of Atmospheric Pressure Microwave Stripping of Tea Aroma/Flavour from Black Tea Leaf Under Three Different Conditions[*] | | | |
|---|---|---|---|
| | Test No. | | |
| | 1 | 2 | 3 |
| Aroma/Flavour Stripping efficiency (% aroma/flavour of starting leaf) | 46 | 56 | 71 |
| Aroma/Flavour conc. GC counts/ml | 17684 | 14357 | 7529 |
| Draw-off ratio[b] | 0.76 | 1.13 | 2.73 |
| Total efficiency index[a] | 61 | 50 | 26 |

[*]1 = 30g tea leaf wetted by 30ml of $H_2O$ and microwaved as in Example 1 at 100% 600W power for 3 mins.

[*]2 = 30g tea leaf wetted by 45ml of $H_2O$ and microwaved as in Example 1 at 100% 600W power for 4 mins.

[*]3 = 30g tea leaf wetted by 90ml of $H_2O$ and microwaved as in Example 1 at 100% 600W power for 9 mins.

[a] - Aroma/Flavour Stripping Efficiency/Draw-off Ratio x 100

[b] - Draw-Off Ratio - Condensate Volume/Dry Leaf Weight

TABLE 5

| Effect of Microwave Power on the Efficiency of Stripping Tea Aroma/Flavour under Atmospheric Conditions[*] | | | |
|---|---|---|---|
| | % of Microwave Power (600 W) | | |
| | 100 | 75 | 50 |
| Stripping efficiency (1% aroma of starting leaf) | 52 | 44 | 23 |
| Draw-Off ratio[a] (DOR) | 1.13 | 0.67 | 0.24 |
| Total efficiency index [b]4 | 6 | 66 | 96 |
| Aroma concentration ($\mu$g/ml) | 69 | 111 | 164 |

a - DOR = Volume of condensate collected/dry weight of tea leaf used

b - Total efficiency index = stripping efficiency/DOR x 100

[*] - 30g of tea leaf was prewetted with 45ml of $H_2O$ and stripped at atmospheric pressure and at the specified microwave power for 4 minutes.

11

EXAMPLE 7

Sensory Evaluation of Aroma/Flavour Condensate Obtained Using Microwave Heating

Aroma/flavour condensates obtained from tea leaf in accordance with the process of this invention were evaluated as add-back materials, both to tea leaf and to instant tea solids. At a draw-off ratio of 0.76, 22.8 grams of microwave aroma/flavour condensate was produced from 30 grams of dry black tea leaf, following the process described in Test No. 1, Example 5 above. The stripped tea leaf was then air dried at room temperature to a stable moisture content.

Leaf Tea

The stripped, dried tea leaf obtained above was divided into two portions. The first, portion A, was packed into tea bags at a level of two grams of tea leaf per bag. The second, portion B, was combined with the microwave aroma/flavour condensate obtained above, at a level of 1.52 grams condensate for each two grams of dry leaf. The mixture was then allowed to dry at room temperature to a stable moisture content, and packed into tea bags at a level of two grams per bag. Tea bags from each portions A and B, as well as tea bags containing two grams each of the original black leaf tea, portion C, used as the starting material in preparing portions A and B, were brewed for three minutes in boiling water poured into tea cups, and then evaluated by experienced tasters.

It was found that the microwaved leaf of portions A and B brewed slightly more slowly than the starting leaf, portion C. However, at the end of the 3 minute brewing period, the infusions prepared from all three portions of leaves looked the same. Without aroma add-back, the infusion produced from the microwaved leaf (portion A) tasted more bitter, brisk, harsh and astringent and was not acceptable. With aroma add-back (portion B), the brew was well rounded and was very close in flavour and aroma to the infusion prepared from the starting leaf, portion C.

Decaffeinated Leaf

An additional 30 grams of dry black tea leaf was treated at a draw-off ratio of 0.76, as described above, to obtain 22.8 grams of microwave aroma/flavour condensate. The stripped leaf, without substantial drying, was then decaffeinated with supercritical $CO_2$, following the steps and conditions given in the second phase of Example 1 of U.S. Patent No. 4,167,589. In addition, 30 grams of the original dry black tea leaf was moistened by addition thereto of 30 grams of water, and then subjected to the same decaffeination process. On completion of the decaffeination step, both batches of tea leaf were dried at room temperature to stable moisture content and packaged into tea bags containing 2 grams each.

The tea bags were brewed into tea by adding boiling water to the bag in a tea cup and allowing the infusion to stand for three minutes. Evaluation by experienced tasters established that the decaffeinated microwave stripped leaf produced a brew that was superior in taste and aroma to brewed decaffeinated original tea leaf, decaffeinated by the same method.

Instant Tea

Dry black tea leaf, as used above, was subject to aqueous extraction to recover an aqueous extract containing 35% of the solids of the starting tea leaf. The aqueous extract was obtained using a multi-stage extraction technique, whereby the fresh leaf is subjected to four counter-current stages of aqueous extraction, the first three at atmospheric pressure and at temperatures approaching the boiling point. The fourth stage was at higher temperature and pressure conditions of 155°C, with 689.01-757.91 kPa overpressure (100-110 p.s.i.g.) steam and residence time of 4 minutes. At the conclusion of stage 4, the aqueous extract was stripped of the aroma and flavour by conventional means, including condensation of vapours at liquid nitrogen temperature, and the extract was decreamed and dehazed by conventional techniques, whereafter it was dried to produce an instant tea powder.

A comparison was made of the quality of the microwave aroma/flavour condensate of the present invention with that obtained during the conventional manufacture of instant tea. Both aroma/flavour concentrates were added to a solution of instant tea solids. 0.7 grams of the instant tea powder described above was dissolved in 200 ml of water to provide, based on process yield values, a tea calculated to be correct for drinking as a typical brew. To this solution, 1.52 grams of microwave aroma/flavour condensate obtained as described above, was added, to provide instant tea product A. Similarly, an amount of aroma/flavour concentrate obtained from the conventional extraction process, equivalent to the 1.52 grams of microwave aroma/flavour condensate, as determined by an expert tea taster, was added back to another 200 ml of water containing 0.7 grams of the instant tea powder to provide a control sample, product B.

Products A and B were evaluated as iced tea products by experienced tea tasters. Product A, containing the microwave aroma/flavour condensate was considered to be more tea-like than product B. This observation was consistent with the analytical observation that the microwave aroma/flavour condensate contained a higher proportion of the tea-like components (57% vs. 43%) and 50 times less of thermally derived aldehydic components than the conventional tea aroma/flavour condensate.

**Claims**

1. A method of stripping aroma and flavour compounds from a plant material by subjecting the plant material to microwave radiation in the presence of water, which comprises the step of:
   (a) releasing from the plant material as a vapour about 25 to 80% of the flavour and aroma compounds in the plant material, together with a substantial portion of the water present by exposure to microwave radiation of an energy level of from 0.1 to 200 kW and a frequency of from 715 to 2450 MHz, the conditions under which the plant material is subjected to the microwave radiation ensuring uniform radiation exposure and being insufficient in intensity to cause substantial damage to the plant material;
   (b) drawing off the said vapour from the stripped plant material, and
   (c) collecting the said vapour as a condensate.

2. A method according to claim 1, characterized in that in step (b) the stripped plant material is subjected to a further processing step selected from the group consisting of aqueous extraction, decaffeination and drying.

3. A method according to claim 3, characterized in that the collected vapour condensate is added to the said further processed stripped plant material.

4. A method according to claims 1-4, characterized in that the plant material is tea leaf.

5. A method according to claims 1-4, characterized in that in step (a) the plant material is tea leaf having a water content of from 25 to 90% by weight.

**Patentansprüche**

1. Verfahren zum Strippen von Aroma- und Geschmacksverbindungen aus einem Pflanzenmaterial, indem das Pflanzenmaterial Mikrowellenstrahlung in Anwesenheit von Wasser ausgesetzt wird, das die folgenden Schritte umfaßt:
   (a) Freisetzen von etwa 25 bis 80 % der Geschmacks- und Aromaverbindungen im Pflanzenmaterial zusammen mit einem wesentlichen Teil des vorhandenen Wassers als Dampf durch Aussetzen an Mikrowellenstrahlung mit einem Leistungspegel von 0,1 bis 200 kW und einer Frequenz von 715 bis 2450 MHz, wobei die Bedingungen, unter denen das Pflanzenmaterial der Mikrowellenstrahlung ausgesetzt wird, ein gleichmäßiges Aussetzen an die Strahlung gewährleisten und in der Intensität nicht ausreichend sind, eine wesentliche Schädigung des Pflanzenmaterials zu bewirken,
   (b) Abziehen des Dampfes aus dem gestrippten Pflanzenmaterial und
   (c) Sammeln des Dampfes als Kondensat.

2. Verfahren nach Anspruch 1, dadurch gekennzeichnet, daß in Schritt (b) das gestrippte Pflanzenmaterial einem weiteren Behandlungsschritt ausgewählt aus der Gruppe bestehend aus wässeriger Extraktion, Entkoffeinierung und Trocknen unterworfen wird.

3. Verfahren nach Anspruch 2, dadurch gekennzeichnet, daß das gesammelte Dampfkondensat dem weiter behandelten gestrippten Pflanzenmaterial zugesetzt wird.

4. Verfahren nach den Ansprüchen 1 bis 3, dadurch gekennzeichnet, daß das Pflanzenmaterial Teeblätter sind.

**5.** Verfahren nach den Ansprüchen 1 bis 3, dadurch gekennzeichnet, daß in Schritt (a) das Pflanzenmaterial Teeblätter mit einem Wassergehalt von 25 bis 90 Gew.% sind.

## Revendications

**1.** Procédé d'extraction de composés d'aromatisation et de sapidité à partir d'une matière végétale en soumettant la matière végétale à un rayonnement d'hyperfréquence en présence d'eau, procédé qui consiste :

(a) à dégager de la matière végétale sous forme d'une vapeur environ 25 à 80% des composés de sapidité et d'aromatisation de la matière végétale, conjointement avec une partie importante d'eau présente, par exposition à un rayonnement d'hyperfréquence ayant un niveau d'énergie compris entre 0,1 et 200 kW et une fréquence de 715 à 2450 MHz, les conditions dans lesquelles la matière végétale est soumise au rayonnement d'hyperfréquence assurant une exposition uniforme au rayonnement et ayant une intensité insuffisante pour occasionner un endommagement notable de la matière végétale ;

(b) à soutirer ladite vapeur de la matière végétale en cours d'extraction, et

(c) à collecter ladite vapeur sous forme d'un condensat.

**2.** Procédé selon la revendication 1, caractérisé en ce qu'au stade b) on soumet la matière végétale extraite à un autre stade de traitement choisi parmi une extraction aqueuse, une décafféinisation et le séchage.

**3.** Procédé selon la revendication 2, caractérisé en ce que le condensat de vapeur collecté est ajouté à ladite matière végétale extraite ayant subi ledit autre traitement.

**4.** Procédé selon les revendications 1 à 3, caractérisé en ce que la matière végétale est le thé en feuilles.

**5.** Procédé selon les revendications 1 à 4, caractérisé en ce qu'au stade a) la matière végétale est le thé en feuilles présentant une teneur en eau de 25 à 90% en poids.

FIG. 1

FIG. 2